# EUROPEAN PATENT APPLICATION

(11) **EP 4 664 630 A1**
(43) Date of publication of application: **17.12.2025**
(21) Application number: 25176614.3
(22) Date of filing: 15.05.2025
(51) Int. Cl.: H01M 50/207, H01M 50/249, H01M 50/258, H01M 50/291, H01M 50/35, B60L 50/60, H01M 50/209

(54) **POWER STORAGE DEVICE**

(30) Priority: 13.06.2024 JP 2024096057
(71) Applicant: TOYOTA JIDOSHA KABUSHIKI KAISHA, Toyota-shi, Aichi-ken 471-8571 (JP)
(72) Inventor: INOUE, Shigeyuki, Toyota-shi, 471-8571 (JP); SUGIE, Kazuki, Toyota-shi, 471-8571 (JP); KUMAZAWA, Kazuya, Toyota-shi, 471-8571 (JP)
(74) Representative: TBK

(57) **Abstract**

A power storage device (10) includes at least one power storage cell (100), a top wall (220) provided over the power storage cell, a facing wall (212, 240) facing the power storage cell in a width direction, a support portion (300) supporting the power storage cell, and a bottom plate (230) disposed under the power storage cell. The bottom plate (230) includes a connecting surface (231a) formed so as to be flat. At least one of the facing wall and the support portion includes a bottom surface (212a, 310a) formed in a position closest to the connecting surface (231a) of the bottom plate (230) and formed so as to be flat. The connecting surface (231a) of the bottom plate (230) is connected to the bottom surface.

## Description

### CROSS REFERENCE TO RELATED APPLICATIONS

This nonprovisional application is based on Japanese Patent Application No. 2024-096057 filed on June 13, 2024 with the Japan Patent Office, the entire contents of which are hereby incorporated by reference.

### BACKGROUND

### Field

The present disclosure relates to a power storage device.

### Description of the Background Art

For example, Japanese National Patent Publication No. 2022-525014 discloses a power battery pack including a plurality of unit cells and an accommodating device. An external terminal and an explosion-proof valve are provided on a side surface of a case of each of the unit cells.

### SUMMARY

In the power battery pack described in Japanese National Patent Publication No. 2022-525014, it is difficult to attach or detach (replace) a bottom portion of the accommodating device.

An object of the present disclosure is to provide a power storage device in which a bottom plate can be attached and detached easily.

A power storage device according to an aspect of the present disclosure includes at least one power storage cell, a top wall provided over the at least one power storage cell, a facing wall facing the at least one power storage cell in a width direction orthogonal to both a thickness direction and an up-down direction of the at least one power storage cell, a support portion connected to the facing wall and supporting the at least one power storage cell, and a bottom plate disposed under the at least one power storage cell. In the power storage device, the bottom plate includes a connecting surface formed so as to be flat, at least one of the facing wall and the support portion includes a bottom surface formed in a position closest to the connecting surface of the bottom plate and formed so as to be flat, and the connecting surface of the bottom plate is connected to the bottom surface.

The foregoing and other objects, features, aspects, and advantages of the present disclosure will become apparent from the following detailed description of the present disclosure, which will be understood in conjunction with the accompanying drawings.

### BRIEF DESCRIPTION OF THE DRAWINGS

Fig. 1 is a diagram that schematically illustrates a vehicle including a power storage device according to an embodiment of the present disclosure.
Fig. 2 is a perspective view that schematically illustrates the power storage device and a frame member.
Fig. 3 is a cross-sectional view along line III-III in Fig. 2.
Fig. 4 is a cross-sectional view along line IV-IV in Fig. 3.
Fig. 5 is an exploded cross-sectional view of the power storage device.
Fig. 6 is an enlarged cross-sectional view of the power storage device.
Fig. 7 is a plan view that schematically illustrates a frame body and a partition wall.
Fig. 8 is a cross-sectional view that schematically illustrates a variation of a facing wall and a support portion.
Fig. 9 is a cross-sectional view that schematically illustrates a variation of the facing wall and the support portion.
Fig. 10 is a cross-sectional view that schematically illustrates a variation of the facing wall and the support portion.

### DESCRIPTION OF THE PREFERRED EMBODIMENTS

Embodiments of the present disclosure are described with reference to the drawings. In the drawings referred to below, the same reference numerals are given to identical or equivalent members.

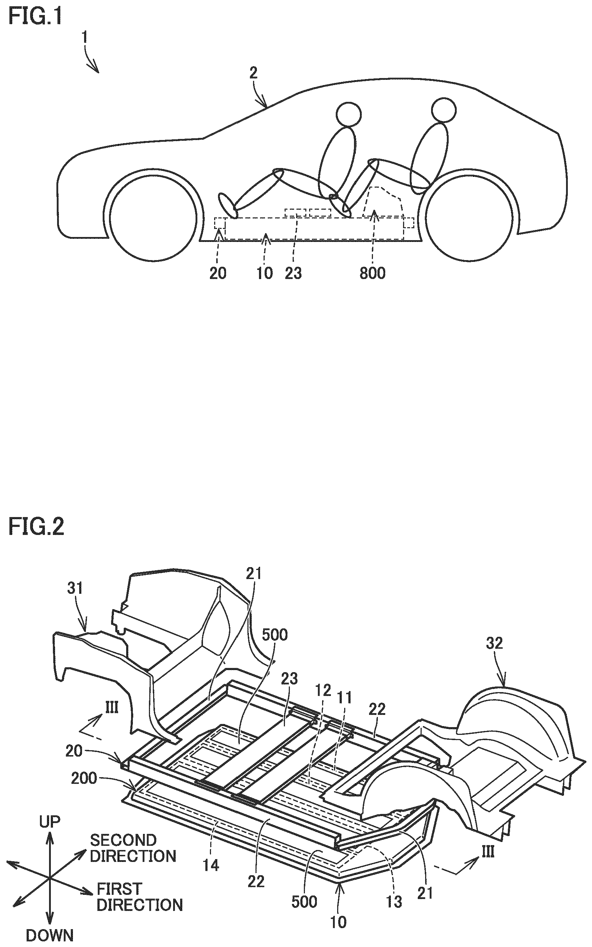

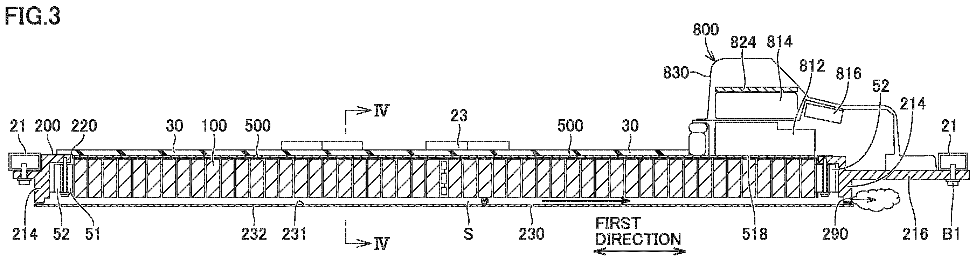

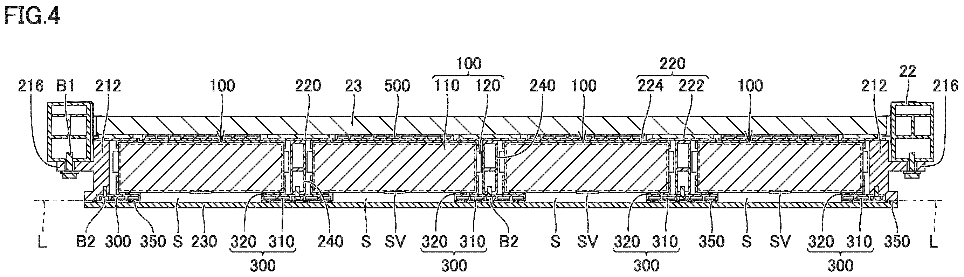

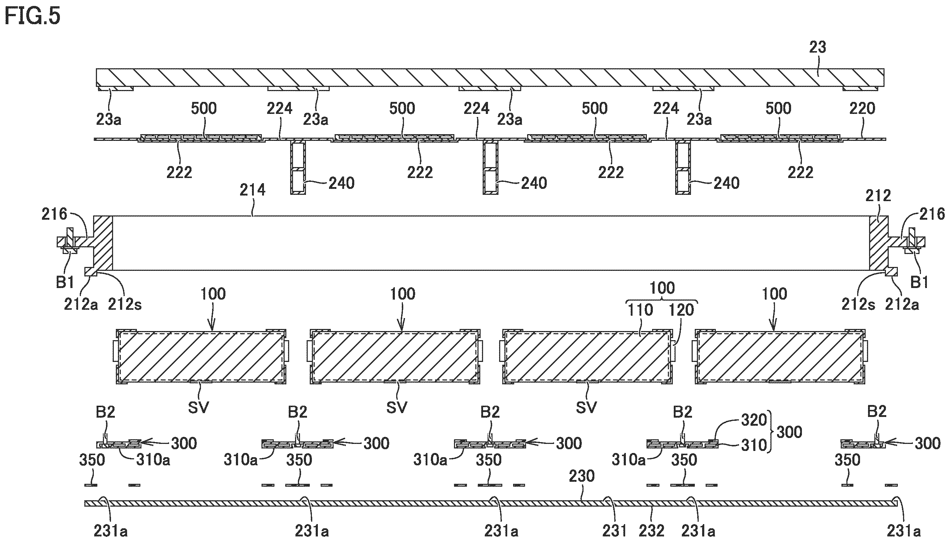

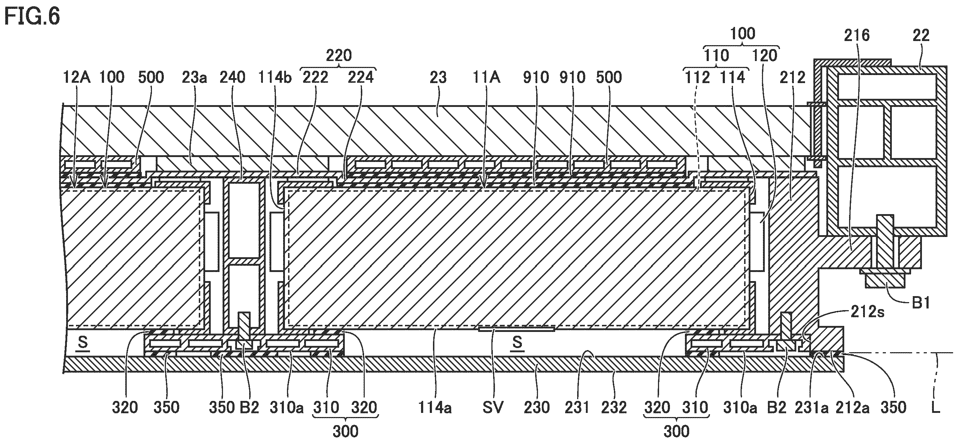

Fig. 1 is a diagram that schematically illustrates a vehicle including a power storage device according to an embodiment of the present disclosure. Fig. 2 is a perspective view that schematically illustrates the power storage device and a frame member. Fig. 3 is a cross-sectional view along line III-III in Fig. 2. Fig. 4 is a cross-sectional view along line IV-IV in Fig. 3. Fig. 5 is an exploded cross-sectional view of the power storage device. Fig. 6 is an enlarged cross-sectional view of the power storage device.

As illustrated in Fig. 1, vehicle 1 includes a vehicle body 2 and a power storage device 10. Examples of vehicle 1 include a hybrid electric vehicle, a plug-in hybrid electric vehicle, and a battery electric vehicle.

As illustrated in Figs. 1 and 2, vehicle body 2 includes a frame member 20, a front component 31, and a rear component 32. Frame member 20 is disposed in a bottom portion of vehicle body 2. Frame member 20 includes a pair of first frames 21, a pair of second frames 22, and a cross frame 23.

The pair of first frames 21 face each other in a first direction. The first direction may be a direction parallel to the front-rear direction of vehicle 1. In the example illustrated in Fig. 2, first frame 21 disposed on the front side has a shape extending along a second direction orthogonal to both the first direction and the up-down direction. First frame 21 disposed on the rear side has a shape extending in the second direction and projecting rearward. The second direction may be a direction parallel to the left-right direction (width direction) of vehicle 1.

The pair of second frames 22 face each other in the second direction. Each second frame 22 has a shape extending along the first direction. An end portion of each second frame 22 in the first direction is connected to first frame 21. Together with the pair of first frames 21, the pair of second frames 22 are formed in a substantially quadrangular cylindrical shape surrounding power storage device 10.

Cross frame 23 is disposed between the pair of first frames 21 and connects the pair of second frames 22 to each other. Cross frame 23 forms a seat cloth for example. A spacer 23a is disposed on a lower surface of cross frame 23.

Front component 31 is connected to a front portion of frame member 20. Rear component 32 is connected to a rear portion of frame member 20. Each of components 31 and 32 may be formed by aluminum die casting.

Power storage device 10 is attached to frame member 20. As illustrated in Figs. 2 to 6, power storage device 10 is disposed under cross frame 23. As illustrated in Figs. 1 to 6, power storage device 10 includes four power storage stacks 11 to 14, a housing 200, a support portion 300, an adhesive member 350, a cooler 500, and a device unit 800. The number of power storage stacks is not limited to four. In Fig. 2, device unit 800 is not illustrated.

Each of power storage stacks 11 to 14 includes at least one power storage cell 100. In the present embodiment, each of power storage stacks 11 to 14 includes a power storage cell group including a plurality of (for example, 50) power storage cells 100 arranged side by side along the first direction. Each of power storage stacks 11 to 14 may further include a plurality of spacers. Each spacer is disposed between a pair of power storage cells 100 adjacent to each other in the power storage cell group. Each of power storage stacks 11 to 14 is formed in a rectangular parallelepiped shape long in the first direction. As illustrated in Fig. 2, four power storage stacks 11 to 14 are arranged side by side along the second direction.

As illustrated in Fig. 3, a pair of end plates 51 between which the plurality of power storage cells 100 are sandwiched from both sides in the first direction are provided on both sides of the plurality of power storage cells 100 in the first direction. A monitoring unit (a smart battery management) 52 is disposed outside each end plate 51 in the first direction.

As illustrated in Figs. 4 to 6, each power storage cell 100 includes a cell body 110 and a pair of external terminals 120. Fig. 6 illustrates power storage cell 100 included in a first power storage cell group 11A of first power storage stack 11 and part of power storage cell 100 included in a second power storage cell group 12A of second power storage stack 12.

Cell body 110 includes an electrode assembly 112 and a cell case 114. A thickness direction of cell body 110 corresponds to the first direction. A width direction of cell body 110 (a direction orthogonal to both the thickness direction and the up-down direction) corresponds to the second direction.

Electrode assembly 112 may be formed by a wound body in which a positive electrode sheet and a negative electrode sheet are wound with a separator interposed therebetween or may be formed by a stack in which a positive electrode sheet and a negative electrode sheet are stacked with a separator interposed therebetween. Electrode assembly 112 is formed in a shape long in the second direction.

Cell case 114 accommodates electrode assembly 112. Cell case 114 is formed in a rectangular parallelepiped shape. Cell case 114 is made of metal such as aluminum.

As illustrated in Figs. 4 to 6, a safety valve SV is provided on a lower surface 114a of cell case 114.

Each external terminal 120 protrudes in the second direction from a side surface 114b of cell case 114 in the second direction. One of the pair of external terminals 120 protrudes from one of side surfaces 114b of cell case 114 in the second direction. The other of the pair of external terminals 120 protrudes from the other side surface 114b of cell case 114 in the second direction.

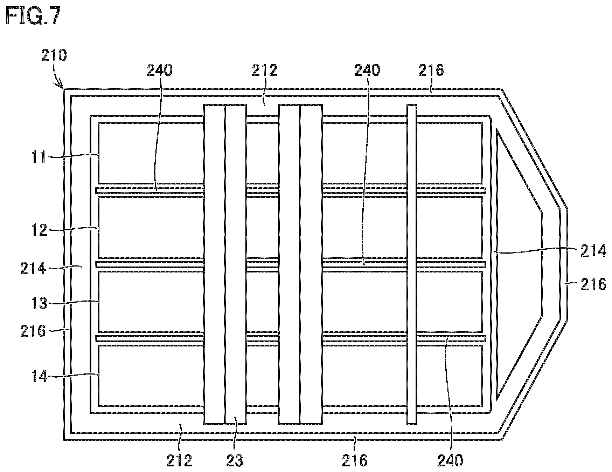

Housing 200 accommodates four power storage stacks 11 to 14. As illustrated in Figs. 4 to 7, housing 200 includes a frame body 210, a top wall 220, a bottom plate 230, and a plurality of (three in the present embodiment) partition walls 240. In Fig. 7, top wall 220 is not illustrated.

Frame body 210 surrounds four power storage stacks 11 to 14, collectively. Frame body 210 may be formed in a quadrangular cylindrical shape. Frame body 210 is formed by aluminum die casting for example. As illustrated in Figs. 3 to 7, frame body 210 includes a pair of side walls 212, a pair of connecting walls 214, and a fixing portion 216.

As illustrated in Figs. 4 and 7, each side wall 212 is disposed outside the plurality of power storage cell groups in the second direction. That is, the pair of side walls 212 are disposed in positions where four power storage stacks 11 to 14 are sandwiched in the second direction. Each side wall 212 extends along the first direction. The length of each side wall 212 in the first direction is longer than the length of each of power storage stacks 11 to 14 in the first direction. Each side wall 212 includes a lower surface 212a formed so as to be flat.

The pair of connecting walls 214 are provided on both sides of at least one power storage cell 100 in the first direction (thickness direction). Each connecting wall 214 connects the pair of side walls 212 to each other. In the present embodiment, connecting wall 214 disposed on one side in the first direction (front side in the front-rear direction of the vehicle) connects respective end portions (front end portions) of side walls 212 on one side in the first direction to each other. Connecting wall 214 disposed on the other side in the first direction (rear side in the front-rear direction of the vehicle) connects respective end portions (rear end portions) of side walls 212 on the other side in the first direction to each other. A lower surface of each connecting wall 214 is formed so as to be flat.

Fixing portion 216 is a portion connected to frame member 20. Fixing portion 216 has a shape extending outward from an outer surface of first frame 21 and an outer surface of second frame 22. Fixing portion 216 is fastened to frames 21 and 22 from below by bolts B1.

Top wall 220 is provided over at least one power storage cell 100. In the present embodiment, top wall 220 is provided over four power storage stacks 11 to 14. Top wall 220 covers four power storage stacks 11 to 14. Top wall 220 is connected to an upper end portion of frame body 210. Specifically, top wall 220 is connected to an upper end portion of each side wall 212 and an upper end portion of each connecting wall 214 by welding or the like. As illustrated in Figs. 4 to 6, top wall 220 includes a top portion 222 and four depressed portions 224.

Top portion 222 is formed so as to be flat. In the up-down direction, top portion 222 overlaps an end portion of each power storage stack in the second direction. Spacer 23a is provided between top portion 222 and cross frame 23.

Each depressed portion 224 is depressed downward from top portion 222. Each depressed portion 224 is formed so as to be flat. Depressed portions 224 are formed over respective central portions of power storage stacks 11 to 14 in the second direction. As illustrated in Fig. 6, the length of each depressed portion 224 in the second direction is shorter than the length of power storage cell 100 in the second direction. Each depressed portion 224 is in contact with an upper surface of cell case 114 with a thermally conductive adhesive 910 interposed therebetween.

Bottom plate 230 is disposed under at least one power storage cell 100. In the present embodiment, bottom plate 230 is disposed under four power storage stacks 11 to 14. Bottom plate 230 is connected to a lower portion of frame body 210. Bottom plate 230 may be fastened to the lower portion of frame body 210 by a bolt.

Bottom plate 230 includes an upper surface 231 and a lower surface 232. Upper surface 231 includes a connecting surface 231a formed so as to be flat. Including connecting surface 231a, upper surface 231 is formed so as to be flat. Lower surface 232 is formed so as to be flat. That is, bottom plate 230 is formed in a flat plate shape.

Adhesive member 350 is disposed between frame body 210 and bottom plate 230. Adhesive member 350 is provided between lower surface 212a of each side wall 212 and the lower surface of each connecting wall 214, and upper surface 231 of bottom plate 230.

Each partition wall 240 serves as a partition between a pair of power storage cell groups facing each other in the second direction. Each partition wall 240 is disposed between a pair of external terminals 120 facing each other in the second direction. Each partition wall 240 extends downward from top wall 220. An upper end portion of partition wall 240 is connected to a lower surface of top portion 222 of top wall 220 by welding, bonding, fastening, or the like. Each partition wall 240 extends in the first direction. An end portion of each partition wall 240 in the first direction may be connected to connecting wall 214 of frame body 210 or may be separated from connecting wall 214. Each partition wall 240 is connected to cross frame 23 with top wall 220 and spacer 23a interposed therebetween. Each partition wall 240 may be formed by extrusion molding of metal such as aluminum.

Each partition wall 240 and each side wall 212 constitute a "facing wall" that faces power storage cell 100 in the second direction (width direction). In other words, each partition wall 240 and each side wall 212 are examples of the "facing wall" according to the present disclosure.

Support portion 300 supports at least one power storage cell 100. Support portions 300 support lower surface 114a of both end portions of power storage cell 100 in the second direction. Support portion 300 supports four power storage stacks 11 to 14. Support portion 300 is connected to the facing wall. As illustrated in Figs. 4 and 5, power storage device 10 according to the present embodiment includes five support portions 300 that are spaced apart from each other in the second direction. Each support portion 300 includes a support portion body 310 and an adhesive member 320.

Support portion body 310 is disposed in a position overlapping, in the up-down direction, respective end portions of a pair of power storage cells 100 facing each other in the second direction. Support portion body 310 has a shape in which a portion of lower surface 114a of cell case 114 other than the portion overlapping support portion body 310 in the up-down direction, i.e. a portion including safety valve SV, is exposed downward. In other words, a portion of lower surface 114a of cell case 114 that does not overlap support portion body 310 in the up-down direction is exposed downward. Support portion body 310 extends in the first direction. Support portion body 310 may be formed by extrusion molding of metal such as aluminum.

As illustrated in Figs. 5 and 6, support portion body 310 includes a lower surface 310a formed so as to be flat. In the present embodiment, lower surface 310a is formed so as to be flush with lower surface 212a of each side wall 212. In Figs. 4 and 6, an imaginary plane L including lower surface 212a of side wall 212 and lower surface 310a of support portion body 310 is indicated by a two-dot chain line.

Each of the three support portion bodies 310 disposed in the center in the second direction is fastened to a lower end portion of partition wall 240 by a bolt B2. Each of the pair of support portion bodies 310 disposed on the outer sides in the second direction is fastened to a lower portion of side wall 212 by bolt B2. As illustrated in Figs. 5 and 6, a notch 212s that accepts support portion body 310 is formed in the lower portion of each side wall 212. Support portion body 310 is situated on the inner side of notch 212s.

Adhesive member 320 causes an end portion of support portion body 310 in the second direction to adhere to lower surface 114a of power storage cell 100.

At least one of the facing wall and support portion 300 includes a bottom surface formed in a position closest to connecting surface 231a of bottom plate 230 and formed so as to be flat. In the present embodiment, both lower surface 212a of each side wall 212 and lower surface 310a of support portion body 310 constitute the bottom surface. Connecting surface 231a of bottom plate 230 is connected to the bottom surface by adhesive member 350. The "position closest to connecting surface 231a of bottom plate 230" denotes a position where the length along the direction perpendicular to connecting surface 231a from connecting surface 231a of bottom plate 230 is smallest.

As illustrated in Fig. 6, a pair of support portions 300 adjacent to each other in the second direction are in contact with lower surface 114a of an end portion of power storage cell 100 in the second direction and bottom plate 230. The pair of support portions 300 define a space S under each of power storage stacks 11 to 14 together with power storage cell 100 and bottom plate 230. That is, in the present embodiment, four spaces S are formed in housing 200.

As illustrated in Fig. 3, each space S extends in the first direction. Each space S functions as a smoke discharge path (hereinafter, referred to as "smoke discharge path S"). Smoke discharge path S is a path for discharging the gas discharged from safety valve SV of power storage cell 100 to the outside of housing 200. Each smoke discharge path S is connected to a common space in housing 200 at an end portion of smoke discharge path S in the first direction.

As illustrated in Fig. 3, an explosion-proof valve 290 is provided in a portion of connecting wall 214 that faces smoke discharge path S in the first direction. Explosion-proof valve 290 is provided in the common space in housing 200. Explosion-proof valve 290 releases the pressure in housing 200. Explosion-proof valve 290 opens when the pressure in housing 200 becomes higher than or equal to a reference value. Explosion-proof valve 290 is constituted by a check valve. As illustrated in Fig. 3, when gas is discharged from any of power storage cells 100, the gas spreads in the first direction through smoke discharge path S and is discharged to the outside of housing 200 through explosion-proof valve 290.

Cooler 500 cools at least one power storage cell 100. A cooling medium (water or the like) flows in cooler 500. As illustrated in Figs. 2 to 6, cooler 500 is provided on top wall 220. More specifically, cooler 500 is disposed in depressed portion 224 of top wall 220.

Cooler 500 is in thermal contact with at least one power storage cell 100 with top wall 220 interposed therebetween. In the present embodiment, thermally conductive adhesive 910 (see Fig. 6) extending along the first direction is provided between cooler 500 and depressed portion 224. That is, in the present embodiment, cooler 500 is in thermal contact with each of power storage stacks 11 to 14 with top wall 220 and thermally conductive adhesive 910 interposed therebetween. The thermal contact includes cooler 500 being in contact with power storage cell 100 with interposition of top wall 220 only and cooler 500 being indirectly in contact with power storage cell 100 with interposition of a member having thermal conductivity (such as an adhesive or a fixing member).

Cooler 500 forms at least part of a floor portion 30 (see Fig. 3) of a vehicle cabin. Floor portion 30 of the vehicle cabin may include a floor component (such as a covering member, a buffer member, or a carpet) disposed on cooler 500 in addition to cooler 500. In Figs. 2 and 4 to 6, the floor component is not illustrated.

Device unit 800 is disposed, for example, in an end portion in the first direction. In the present embodiment, device unit 800 is disposed over a rear portion of top wall 220 in the front-rear direction of vehicle 1. Device unit 800 includes a junction box 812, an electricity supply unit 814, an electronic control unit 816, a unit cooler 824, and a device cover 830.

Junction box 812 is disposed over top wall 220. Junction box 812 accommodates a relay, a fuse, and the like.

As illustrated in Fig. 3, cooler 500 includes an interposed portion 518 interposed between top wall 220 and junction box 812. Junction box 812 is cooled owing to interposed portion 518.

Electricity supply unit 814 is disposed over junction box 812. Electricity supply unit 814 is cooled by unit cooler 824 disposed over electricity supply unit 814.

Electronic control unit 816 is disposed above junction box 812.

Device cover 830 accommodates junction box 812, electricity supply unit 814, electronic control unit 816, and unit cooler 824.

In power storage device 10 described above, when gas is discharged downward from safety valve SV due to a short circuit or the like in any of power storage cells 100, the gas flows into smoke discharge path S. The gas that flows into smoke discharge path S spreads in the first direction to be discharged from housing 200 through explosion-proof valve 290 as illustrated in Fig. 3. Accordingly, a matter (so-called debris) from power storage cell 100, which is contained in the gas, can be hindered from adhering to external terminal 120 or the like of power storage cell 100.

Further, since in power storage device 10, both the bottom surface of at least one of the facing wall (side wall 212 and partition wall 240) and support portion 300 and connecting surface 231a of bottom plate 230 are formed so as to be flat, attachment of bottom plate 230 to the bottom surface and detachment of bottom plate 230 from the bottom surface are facilitated. Thus, when bottom plate 230 is damaged for example, bottom plate 230 can be replaced easily.

In addition, since in the above-described embodiment, both the bottom surface and upper surface 231 of bottom plate 230 are formed so as to be flat, adhesive member 350 is cut by moving a member capable of cutting adhesive member 350 (a wire made of high tension steel, a blade, or the like) between the bottom surface and upper surface 231 of bottom plate 230 along the second direction. Accordingly, removal of bottom plate 230 is enabled.

Variations of the above-described embodiment are described below.

### <First Variation>

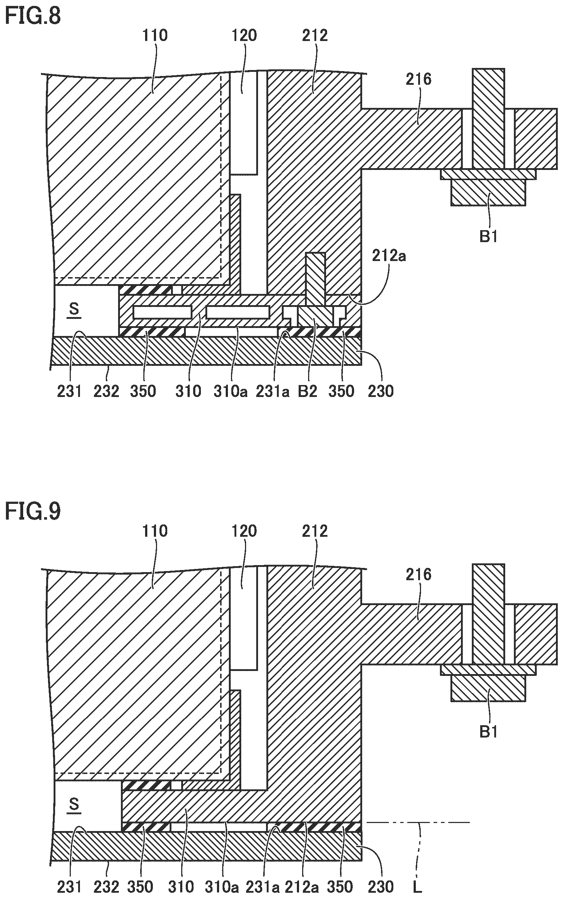

As illustrated in Fig. 8, support portion body 310 may be connected to lower surface 212a of side wall 212. Support portion body 310 is connected to lower surface 212a of side wall 212 by, for example, bolt B2. In this variation, the bottom surface, that is, the surface formed in a position closest to upper surface 231 of bottom plate 230 and formed so as to be flat is constituted by lower surface 310a of support portion body 310.

### <Second Variation>

As illustrated in Fig. 9, support portion body 310 may be integrally formed of the same material as that of side wall 212. Side wall 212 and support portion body 310 are formed by aluminum die casting for example. In this variation, the bottom surface, that is, the surface formed in a position closest to upper surface 231 of bottom plate 230 and formed so as to be flat is constituted by both lower surface 212a of side wall 212 and lower surface 310a of support portion body 310.

### <Third Variation>

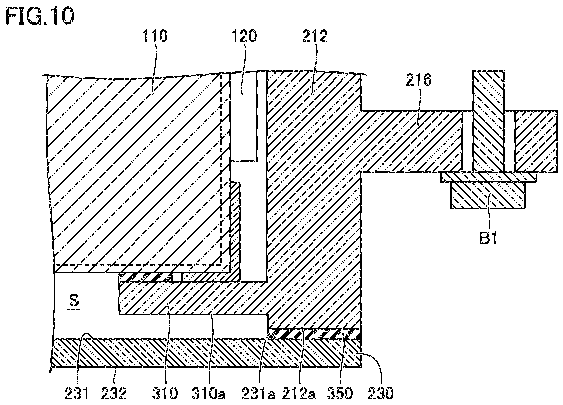

As illustrated in Fig. 10, support portion body 310 may be connected to a portion of side wall 212 above lower surface 212a. Side wall 212 and support portion body 310 are formed by aluminum die casting for example. In this variation, the bottom surface, that is, the surface formed in a position closest to upper surface 231 of bottom plate 230 and formed so as to be flat is constituted by lower surface 212a of side wall 212 instead of lower surface 310a of support portion body 310. Lower surface 310a of support portion body 310 is formed above lower surface 212a of side wall 212 constituting the bottom surface.

Those skilled in the art will understand that the above-described exemplary embodiments are specific examples of the following aspects.

### [Aspect 1]

A power storage device comprising:
at least one power storage cell;
a top wall provided over the at least one power storage cell;
a facing wall facing the at least one power storage cell in a width direction orthogonal to both a thickness direction and an up-down direction of the at least one power storage cell;
a support portion connected to the facing wall and supporting the at least one power storage cell; and
a bottom plate disposed under the at least one power storage cell, wherein
the bottom plate includes a connecting surface formed so as to be flat,
at least one of the facing wall and the support portion includes a bottom surface formed in a position closest to the connecting surface of the bottom plate and formed so as to be flat, and
the connecting surface of the bottom plate is connected to the bottom surface.

Since in the present power storage device, both the bottom surface of at least one of the facing wall and the support portion and the connecting surface of the bottom plate are formed so as to be flat, attachment of the bottom plate to the bottom surface and detachment of the bottom plate from the bottom surface are facilitated. Thus, when the bottom plate is damaged for example, the bottom plate can be replaced easily.

### [Aspect 2]

The power storage device according to aspect 1, wherein
both the facing wall and the support portion include the bottom surface,
the facing wall includes a notch that accepts the support portion, and
the support portion is situated in the notch.

### [Aspect 3]

The power storage device according to aspect 1, wherein
the support portion is connected to a lower surface of the facing wall, and
the bottom surface is constituted by a lower surface of the support portion.

### [Aspect 4]

The power storage device according to aspect 1, wherein
the facing wall includes the bottom surface, and
the support portion includes a lower surface formed above the bottom surface.

### [Aspect 5]

The power storage device according to any one of aspects 1 to 4, wherein the bottom plate includes a lower surface formed so as to be flat.

According to this aspect, the air resistance during the travel of a vehicle is reduced.

### [Aspect 6]

The power storage device according to any one of aspects 1 to 5, further comprising an adhesive member provided between the bottom surface and the connecting surface of the bottom plate.

According to this aspect, since the bottom surface and the connecting surface of the bottom plate are formed so as to be flat, the adhesive member is cut by moving a member capable of cutting the adhesive member (a wire made of high tension steel, a blade, or the like) between the bottom surface and the connecting surface of the bottom plate along the second direction. Accordingly, removal of the bottom plate is enabled.

### [Aspect 7]

The power storage device according to any one of aspects 1 to 6, wherein
the bottom plate includes an upper surface including the connecting surface, and
the upper surface is formed so as to be flat.

Although embodiments of the present disclosure have been described, it should be understood that the herein-disclosed embodiments are presented by way of illustration and example in all respects and are not to be taken by way of limitation. The scope of the present disclosure is defined by the claims and intended to include any modifications within the purport and scope equivalent to the claims.

## Claims

1. A power storage device (10) comprising:
at least one power storage cell (100);
a top wall (220) provided over the at least one power storage cell (100);
a facing wall (212, 240) facing the at least one power storage cell (100) in a width direction orthogonal to both a thickness direction and an up-down direction of the at least one power storage cell (100);
a support portion (300) connected to the facing wall and supporting the at least one power storage cell (100); and
a bottom plate (230) disposed under the at least one power storage cell (100), wherein
the bottom plate (230) includes a connecting surface (231a) formed so as to be flat,
at least one of the facing wall and the support portion (300) includes a bottom surface (212a, 310a) formed in a position closest to the connecting surface (231a) of the bottom plate (230) and formed so as to be flat, and
the connecting surface (231a) of the bottom plate (230) is connected to the bottom surface.

2. The power storage device (10) according to claim 1, wherein
both the facing wall (212) and the support portion (300) include the bottom surface (212a, 310a),
the facing wall (212) includes a notch (212s) that accepts the support portion (300), and
the support portion (300) is situated in the notch (212s).

3. The power storage device (10) according to claim 1, wherein
the support portion (300) is connected to a lower surface (212a) of the facing wall (212), and
the bottom surface is constituted by a lower surface (310a) of the support portion (300).

4. The power storage device (10) according to claim 1, wherein
the facing wall (212) includes the bottom surface (212a), and
the support portion (300) includes a lower surface (310a) formed above the bottom surface (212a).

5. The power storage device (10) according to any one of claims 1 to 4, wherein the bottom plate (230) includes a lower surface (232) formed so as to be flat.

6. The power storage device (10) according to any one of claims 1 to 5, further comprising an adhesive member (350) provided between the bottom surface (212a, 310a) and the connecting surface (231a) of the bottom plate (230).

7. The power storage device (10) according to any one of claims 1 to 6, wherein
the bottom plate (230) includes an upper surface (231) including the connecting surface (231a), and
the upper surface (231) is formed so as to be flat.
